# DEMANDE DE BREVET EUROPEEN

(11) **EP 0 916 627 A1**
(43) Date de publication de la demande: **19.05.1999**
(21) Numéro de dépôt: 98402836.5
(22) Date de dépôt: 16.11.1998
(51) Int. Cl.: C04B 28/02, C04B 26/02, C09K 3/10

(54) **Adjuvant pour liant utilisé dans la construction, et matériau le comportant**

(30) Priorité: 17.11.1997 FR 9714352; 28.11.1997 FR 9715038
(71) Demandeur: Al Kassem, Nizar, Mezzé, Damas (SY); Louhibi, Abdelmalek, 06200 Nice (FR)
(72) Inventeur: Al Hassem, Nizar, Mezzé, Damas (SY); Al Rifai, Haisan, c/o Al Kassem, Nizar, Mezzé, Damas (SY)
(74) Mandataire: Blot, Philippe Robert Emile

(57) **Abrégé**

L'invention concerne un adjuvant pour liant utilisé dans le génie. Il comporte en solution aqueuse, un mélange d'un éther cellulosique hydrosoluble et d'un agent anti-mousse.

Application à l'étanchéité, à la prévention de la rouille sur une surface métallique, et à la réalisation d'un écran pare-feu.

Elle concerne en outre un matériau de construction comportant un adjuvant tel que défini ci-dessus et un liant parmi le ciment, le platre, l'enduit, la colle et la peinture.

## Description

L'invention concerne un adjuvant pour liant utilisé dans la construction et le génie. Cet adjuvant a notamment pour but lorsqu'il est appliqué avec un liant sur une surface d'un élément d'une structure :
- d'obtenir une étanchéité à l'eau propre ou non, et aux hydrocarbures ;
- d'obtenir un bon colmatage des fissures ;
- d'obtenir une couche remplaçant le mortier ;
- d'obtenir un enduit préalable à l'exécution des travaux de peinture des surfaces à peindre ;
- d'obtenir une couche de peinture extérieure sur les surfaces d'enduit ;
- d'obtenir un collage et une adhésion parfaite entre la surface et le revêtement (marbre, carrelage, céramique, brique, etc...) ;
- d'obtenir une couche stable au feu et assurer ainsi une protection contre l'incendie ;
- d'obtenir une couche rigide, durable, adhérente sur certains matériaux et en particulier sur des surfaces de polystyrène cellulaire ;
- d'obtenir sur une surface métallique une couche isolante antirouille et en même temps d'avoir une finition acceptable.

En effet, dans la pratique, les problèmes suivants sont rencontrés.

L'exécution de l'étanchéité est effectuée à partir de différents procédés. Cependant les résultats obtenus ne sont pas toujours satisfaisants ni durables en général. De plus, ces procédés sont en général relativement coûteux. De tels procédés d'étanchéification demandent souvent une main d'oeuvre qualifiée et en général un ciment bien déterminé et spécial lorsque celui-ci représente une des matières constitutives du matériau isolant.

L'exécution du colmatage des fissures n'est pas toujours efficace suivant les matériaux utilisés, de plus le colmatage est en général coûteux à réaliser.

L'exécution de plusieurs couches consécutives de mortier sur les surfaces dans le Génie est indispensable afin de réaliser les autres travaux comme ceux nécessaires avant l'exécution des couches d'enduits ce qui demande du temps et du travail non négligeable.

L'exécution des couches d'enduits sur les surfaces dans le Génie est indispensable afin de réaliser les autres travaux comme la peinture. Cependant, ceci demande un travail relativement important, la couche d'enduit étant caractérisée par sa fragilité et présentant certaines difficultés relatives au lissage.

L'exécution de la peinture extérieure donne une couche qui présente parfois certains inconvénients comme la faible durabilité, la perméabilité, la faible résistance aux rayons ultraviolets, et la salissure par la pollution.

L'exécution d'une couche pour collage des revêtements (marbre, carrelage, céramique, brique, etc...) demande du ciment colle qui est relativement coûteux et qui n'est pas toujours disponible dans certains pays du tiers monde.

L'exécution d'une couche stable au feu demande une matière relativement coûteuse et qui n'est pas toujours disponible dans certains pays du tiers monde.

L'exécution des panneaux en polystyrène demande un revêtement étant donné la fragilité de cette matière. Les revêtements utilisés ne donnent pas en général les caractéristiques de durabilité, d'étanchéité, et de résistance au feu en même temps.

L'exécution d'une couche antirouille sur une surface métallique demande une matière relativement coûteuse et qui n'est pas toujours disponible dans certains pays du tiers monde.

L'adjuvant selon l'invention, lorsqu'il est combiné à un liant, et qui est dénommé dans la suite "matière" résout les problèmes énoncés ci-dessus et procure les avantages suivants.

La matière permet d'obtenir une étanchéité parfaite et durable à l'eau propre ou non et aux hydrocarbures, contrairement à celle obtenue par les procédés existants. Cette matière est plus économique, et plus facile à réaliser. Elle peut comprendre une vaste gamme de produits et en particulier une vaste gamme de poudre de ciments.

La matière permet d'obtenir un colmatage durable, et économique.

La matière permet d'obtenir une couche remplaçant le mortier. Cette couche est très facile à réaliser étant donné sa grande maniabilité.

La matière permet d'obtenir un enduit préalable à l'exécution des travaux de peinture des surfaces à peindre. Cet enduit est plus économique et plus facile à réaliser. Le lissage est très facile à faire. De plus, l'enduit est dure après séchage contrairement aux enduits classiques qui sont très fragiles.

La matière permet d'obtenir une couche de peinture extérieure imperméable, durable, résistante aux rayons ultraviolets, facile à nettoyer et à entretenir.

La matière permet d'obtenir un très bon collage et une adhésion parfaite entre la surface et le revêtement (marbre, carrelage, céramique, brique, etc...). Cette matière est plus économique que les ciments colle traditionnels.

La matière permet d'obtenir une couche stable au feu et d'assurer ainsi une protection contre l'incendie. Cette matière est plus économique et les constituants sont en général plus disponibles sur le marché que les autres matières, surtout dans les pays du tiers monde.

La matière permet d'obtenir sur la surface d'un panneau en polystyrène cellulaire un revêtement durable, étanche, et résistant au feu en même temps.

La matière utilisée permet d'obtenir sur une surface métallique une couche isolante antirouille, et en même temps d'avoir une finition acceptable, et économique.

Linvention est aussi bien efficace pour la réalisation de l'étanchéité d'une couche de mortier, d'une couche d'enduit, d'une couche de peinture, d'une couche de colle, d'une couche de protection sur du polystyrène cellulaire.

Trois ou quatre de ces objectifs sont souvent demandés en même temps et ils sont ainsi atteints avec la même matière, ce qui multiplie l'économie réalisée ; en plus il est possible d'obtenir une protection contre la rouille et le feu.

La matière sujet de notre invention est constituée d'un mélange qui, malaxé avec des produits et en particulier de la poudre de ciment nous permet d'obtenir la couche assurant l'étanchéité, remplaçant le mortier, assurant l'enduit, la peinture, le collage, et l'isolation contre le feu et la rouille.

Ce mélange est formé par quatre constituants :

L'eau potable est malaxée avec de la poudre Tylose H 10000 (viscosité) formée d'hydroxyéthylcellulose de l'usine Hoechst d'origine allemande ou de son équivalent fonctionnel ; ce mélange est malaxé avec un liquide anti-mousse Foamex DKC de la marque Info-Tan commercialisé par NUEVA TANEX S.A en Espagne ou son équivalent fonctionnel ; on ajoute éventuellement au produit ainsi obtenu du dioxyde de titane comme colorant pour avoir une couleur blanchâtre ou un autre produit colorant suivant la couleur désirée.

De plus, l'invention a pour objet un adjuvant pour liant utilisé dans la construction, caractérisé en ce qu'il comporte, en solution aqueuse, un mélange d'un éther cellulosique hydrosoluble et d'un agent anti-mousse.

Suivant des modes particuliers de mise en oeuvre, l'adjuvant comporte l'une ou plusieurs des caractéristiques suivantes :
- l'éther cellulosique hydrosoluble comporte de l'hydroxyéthylcellulose ;
- l'agent anti-mousse est une silicone ;
- il comporte 1 à 50 g de hydroxyethylcellulose par litre d'eau et de préférence 18 g/l d'eau ; et
- il comporte en outre un colorant.

L'invention a également pour objet l'utilisation de l'adjuvant mélangé avec un liant pour obtenir l'une ou plusieurs des caractéristiques parmi l'étanchéité, la prévention de la rouille sur une surface métallique, la réalisation d'un écran pare-feu, la réalisation d'un mortier, la réalisation d'un enduit, la réalisation d'une couche de peinture, la réalisation d'un collage, la réalisation d'un revêtement applicable sur du polystyrène.

Elle a en outre pour objet un matériau de construction, caractérisé en ce qu'il comporte un adjuvant tel que décrit ci-dessus et un liant parmi le ciment, le mortier, le plâtre, l'enduit, la colle et la peinture.

Pour la préparation de l'adjuvant, on peut malaxer un litre d'eau potable avec une quantité de 1 à 50 grammes et de préférence 18 grammes de poudre Tylose H10000 (viscosité) à l'aide d'un malaxeur pendant trois minutes ; le malaxage doit être effectué directement lors de l'addition de la poudre avec l'eau.

On peut ajouter à ce mélange une quantité de 10 à 1000 cm³ et de préférence 100 cm³ du liquide anti-mousse FOAMEX DKC et malaxer pendant trois minutes, ce qui permet d'obtenir le produit voulu, constituant l'adjuvant selon l'invention.

On peut ajouter à ce produit, si l'on souhaite lui donner une couleur blanchâtre, un mélange formé d'eau et de dioxyde de titane dans les proportions de 50 cm³ d'eau pour 3 grammes de dioxyde de titane. Ces deux derniers constituants sont malaxés pendant 3 minutes et forment un liquide de couleur blanchâtre. Ce liquide est malaxé à son tour au produit mentionné pendant 3 minutes.

Toutefois, l'ajout d'un colorant est facultatif.

Afin d'obtenir un ciment ayant les propriétés indiquées ci-dessus, on peut malaxer 10 à 1000 cm³ et de préférence 60 cm³ du produit finalement obtenu avec 100 grammes de poudre de ciment par exemple lors de la réalisation des travaux.

L'adjuvant selon l'invention peut être obtenu à partir d'un agent anti-mousse comme le FOAMEX DKC mélangé avec différents types d'éthers cellulosiques hydrosolubles comme la méthylcellulose (MC), la méthylhydroxyéthylcellulose (MHEC), la méthylhydroxypropylcellulose (MHPC), l'hydroxyéthylcellulose (HEC), la carboxyméthylcellulose de sodium (NaCMC) et la carboxyméthylhydroxyéthylcellulose de sodium (NaCMHEC).

L'agent anti-mousse mis en oeuvre ici est du FOAMEX DKC. Cet agent est à base de silicone et contient en outre de l'ophenylphénate tetrahydrate de sodium. L'invention peut également être mise en oeuvre avec du BURST 100 commercialisé par la société ALLIED COLLOIDS en Angleterre.

Avantageusement, l'hydroxyéthylcellulose (HEC) est utilisé dans l'adjuvant mélangé avec le FOAMEX en tant qu'anti-mousse.

L'adjuvant selon l'invention a été testé afin d'évaluer ses propriétés d'étanchéité vis-à-vis de l'eau.

L'essai réalisé a été mené sur une machine d'origine allemande connue sous le nom de "Strassentest" qui est adaptée pour mesurer la perméabilité à l'eau suivant la norme allemande DIN 1048, première partie.

L'essai a été réalisé sur trois échantillons identiques formés chacun d'un prisme en béton. Deux prismes ont été recouverts sur une face d'essai d'un revêtement à base de ciment incorporant le liant selon l'invention. La composition du revêtement était la suivante .60 cm³ d'adjuvant pour 100 g de ciment Portland.

A titre de comparaison, le troisième échantillon a été recouvert sur une face d'essai par un revêtement de "ERTO-FLEX" commercialisé par la société Lafarge en France.

Les revêtements des trois échantillons ont été formés par trois couches d'étanchéité de même nature, d'un millimètre d'épaisseur chacune, mises en place successivement à des intervalles de 24 heures.

L'essai a été réalisé 14 heures après l'application de la dernière couche. L'essai a consisté à appliquer sur chaque couche d'étanchéité une pression de 8,5 bars. Cette pression d'eau a été appliquée de bas en haut. Elle a été maintenue pendant 4 heures.

A l'issue des 4 heures, les trois échantillons ont été cassés longitudinalement afin de mesurer la profondeur de pénétration de l'eau.

Dans l'échantillon de référence, comportant un revêtement en "ERTOFLEX", on constate que l'eau a traversé les 3 mm de la couche d'étanchéité. Toutefois, le béton constituant le prisme n'a pas été mouillé significativement.

Dans les deux échantillons comportant un revêtement à base du liant selon l'invention, on constate que l'eau n'a pénétré dans le revêtement que sur une épaisseur d'un quart de millimètre à un demi millimètre, sur l'épaisseur totale de 3 mm du revêtement.

Il convient donc de conclure qu'avec le revêtement utilisant le liant selon l'invention, la pénétration de l'eau est extrêmement réduite, ce qui garantit une bonne étanchéité. De plus, étant donnée la faible durée de séchage entre l'application de la dernière couche et le début de l'essai (seulement 14 heures), l'eau révélée dans la couche superficielle du revêtement pourrait s'expliquer par un séchage insuffisant de celle-ci, plutôt que par une pénétration réelle de l'eau mise sous pression.

Différentes utilisations et mises en oeuvre de l'adjuvant vont maintenant être décrites.

Pour réaliser l'étanchéité :

On peut appliquer ce produit sur des surfaces par exemple en béton, en mortier, en ciment, en maçonnerie, ou en brique, comme suit :
1 - Frotter la surface à l'aide d'une brosse métallique pour bien la nettoyer ;
2 - Laver la surface avec de l'eau potable ;
3 - Répartir la matière sur la surface à l'aide d'une brosse ;
4 - Répartir la matière une deuxième fois avec un couteau à enduire pour obtenir une deuxième couche d'environ 1 mm d'épaisseur après 12 h ;
5 - Répéter le processus (4) ci-dessus après 12h ; et
6 - Arroser la surface avec de l'eau potable toutes les 24 h pendant trois jours.

Cette matière peut être appliquée aussi bien de l'extérieur de la surface à isoler d'où provient l'eau (poussée active) que de l'intéireur de cette surface (poussée passive ou contre-pression).

Pour réaliser le colmatage des fissures :
1 - Préparer la fissure suivant les procédés classiques ;
2 - Répartir la matière à l'intérieur de la fissure ; et
3 - Arroser la surface avec de l'eau potable toutes les 24 heures pendant 3 jours.

Pour réaliser la couche de mortier :
1 - Frotter la surface à l'aide d'une brosse métallique pour bien la nettoyer ;
2 - Laver la surface avec de l'eau potable ;
3 - Répartir la matière sur la surface à l'aide d'une brosse ;
4 - Répartir la matière une deuxième fois avec un couteau à enduire pour obtenir une deuxième couche d'environ 1 mm d'épaisseur ;
5 - Répéter le processus ci-dessus après 12h ; et
6 - Arroser la surface avec de l'eau potable toutes les 24 h pendant trois jours.

Pour réaliser l'enduit :

On peut appliquer ce produit sur des surfaces par exemple en béton, en mortier, en ciment, en maçonnerie, ou en brique comme suit :
1 - Frotter la surface à l'aide d'une brosse métallique pour bien la nettoyer ;
2 - Laver la surface avec de l'eau potable ;
3 - Répartir la matière sur la surface à l'aide d'une brosse ;
4 - Répartir la matière une deuxième fois avec un couteau à enduire pour obtenir une deuxième couche d'environ 1 mm d'épaisseur après 12 h ;
5 - Lisser la couche obtenue ;
6 - Arroser la surface avec de l'eau potable toutes les 24 heures pendant 3 jours ; et
7 - Peindre la surface considérée.

Pour réaliser la peinture extérieure

On peut appliquer ce produit sur des surfaces par exemple en béton, en mortier, en ciment, en maçonnerie, ou en brique comme suit :
1 - Frotter la surface à l'aide d'une brosse métallique pour bien la nettoyer ;
2 - Laver la surface avec de l'eau potable ;
3 - Répartir 2 couches de la matière consécutives d'intervalle 12 h ; et
4 - Arroser la surface avec de l'eau potable toutes les 24 h pendant trois jours.

Pour réaliser le collage :

On peut appliquer ce produit sur des surfaces par exemple en béton, en mortier, en ciment, en maçonnerie, ou en brique comme suit :
1 - Frotter la surface à l'aide d'une brosse métallique pour bien la nettoyer ;
2 - Laver la surface avec de l'eau potable ;
3 - Nettoyer avec de l'eau la face à coller des carrelages en céramique ;
4 - Répartir la matière sur la surface avec une spatule crantée pour obtenir une couche d'environ 3 mm d'épaisseur ;
5 - Coller les carrelages en céramique ;
6 - Placer les carrelages en céramique sur la surface considérée ; et
7 - Arroser la surface avec de l'eau potable toutes les 24 h pendant trois jours.

Pour réaliser la protection contre le feu :

On peut appliquer ce produit sur des surfaces par exemple en béton, en mortier, en ciment, en maçonnerie, ou en brique comme suit :
1 - Frotter la surface à l'aide d'une brosse métallique pour bien la nettoyer ;
2 - Laver la surface avec de l'eau potable ;
3 - Répartir la matière sur la surface à l'aide d'une brosse ;
4 - Répartir la matière une deuxième fois avec un couteau à enduire pour obtenir une deuxième couche d'environ 1 mm d'épaisseur après 24 h ;
5 - Répéter le processus ci-dessus après 12h ; et
6 - Arroser la surface avec de l'eau potable toutes les 24 h pendant trois jours.

Pour réaliser la couche de revêtement sur le polystyrène cellulaire :

On peut appliquer ce produit sur les panneaux de polystyrène cellulaire comme suit :
1 - Laver la surface des panneaux avec de l'eau potable ;
2 - Répartir la matière avec un couteau à enduire pour obtenir une couche d'environ 1 mm d'épaisseur ;
3 - Poser sur la surface une maille en fibre synthétique ;
4 - Répartir la matière une deuxième fois avec un couteau à enduire pour obtenir une deuxième couche d'environ 1 mm d'épaisseur après 24 h; et
5 - Arroser la surface avec de l'eau potable toutes les 24 h pendant trois jours.

Pour réaliser l'isolation contre la rouille :

On peut appliquer ce produit sur les surfaces métalliques comme suit :
1 - Nettoyer la surface métallique ;
2 - Répartir deux couches consécutives de la matière avec un intervalle de 12 h.

## Revendications

1. Adjuvant pour liant utilisé dans la construction, caractérisé en ce qu'il comporte, en solution aqueuse, un mélange d'un éther cellulosique hydrosoluble et d'un agent anti-mousse, l'éther cellulosique hydrosoluble comportant de l'hydroxyéthylcellulose.

2. Adjuvant selon la revendication 1, caractérisé en ce que l'agent anti-mousse est une silicone.

3. Adjuvant selon l'une quelconque des revendications précédentes, caractérisé en ce qu'il comporte 1 à 50 g de hydroxyethylcellulose par litre d'eau et de préférence 18 g/l d'eau.

4. Adjuvant selon l'une quelconque des revendications précédentes, caractérisé en ce qu'il comporte en outre un colorant.

5. Utilisation de l'adjuvant selon l'une quelconque des revendications 1 à 4, mélangé avec un liant tel que du ciment, du mortier, du plâtre ou de l'enduit pour assurer l'étanchéité.

6. Utilisation de l'adjuvant selon l'une quelconque des revendications 1 à 4, mélangé avec un liant pour obtenir l'une ou plusieurs des caractéristiques parmi la prévention de la rouille sur une surface métallique, la réalisation d'un écran pare-feu, la réalisation d'une couche de peinture, la réalisation d'un collage.
